Europäisches Patentamt

European Patent Office

Office européen des brevets

(19)

(11) Publication number : **0 669 366 A1**

(12) **EUROPEAN PATENT APPLICATION**

(21) Application number : 95301128.5

(22) Date of filing : 22.02.95

(51) Int. Cl.$^6$ : **C08K 5/00,** C08K 5/098,
C08K 5/138, C08K 11/00

(30) Priority : 24.02.94 JP 49968/94
09.01.95 JP 16363/95

(43) Date of publication of application :
30.08.95 Bulletin 95/35

(84) Designated Contracting States :
DE FR GB

(71) Applicant : NISSAN FERRO ORGANIC
CHEMICAL CO. LTD.
Nissan Edobashi Bldg,
10-5 Nihonbashi Honcho 1-chome
Chuo-ku, Tokyo 103 (JP)

(72) Inventor : Odaira, Shouji
457-2, Nissato,
Meiwa-mura
Oura-gun, Gunma-ken (JP)
Inventor : Ishii, Hisashi
Higashi-A, 1-11-2,
Kuribara
Kuki-shi, Saitama-ken (JP)

(74) Representative : Woods, Geoffrey Corlett
J.A. KEMP & CO.
14 South Square
Gray's Inn
London WC1R 5LX (GB)

(54) Halogen-containing resin composition.

(57) A composition is provided comprising 100 parts by weight of a halogen-containing resin (1), and 0.01 to 10, preferably 0.1 to 5 parts by weight of a reaction product (2) of an overbased alkaline earth metal phenolate and/or carboxylate-carbonate complex with a polybasic carboxylic acid anhydride. This halogen-containing resin composition is excellent in heat stability, initial color preventability, plate-out preventability and transparency.

EP 0 669 366 A1

This invention relates to a novel halogen-containing resin composition excellent in heat stability, initial color preventability, transparency and plate-out preventability. More detailedly, this invention relates to a stabilized halogen-containing resin composition wherein the reaction product of at least one overbased complex selected from the group consisting of overbased alkaline earth metal phenolate-carbonate complexes, overbased alkaline earth metal carboxylate-carbonate complexes, and overbased alkaline earth metal phenolate carboxylate-carbonate complexes with a polybasic carboxylic acid anhydride is added.

The above overbased complexes in this invention are compounds known per se, and are complexes formed, for example, by adding carbon dioxide to the reaction product of a monobasic phenol and/or a monobasic carboxylic acid with a larger than chemical equivalent amount of a basic alkaline earth metal compound to neutralize the excess basic alkaline earth metal compound.

Halogen-containing resins, particularly polyvinyl chloride resins are inherently unstable to heat, and decompose through dehalogenati on reaction in the molecular chains by heating at the time of molding, increase of the surface temperature with sunlight at the time of use, etc., and result in coloring, lowering of mechanical strength, etc. Stabi lizers are added to prevent these drawbacks.

However, stabilizers which so far been used contain a heavy metal such as cadmium or lead, and have a drawback of having toxicity. As stabilizers having less toxicity have so far been used combinations of organic acid zinc salts, organic acid alkaline earth metal salts, organotin compounds, organic phosphi te esters, epoxy compounds, antioxidants, polyols, etc. Recently, a system comprising a β-diketone compound and an overbased phenolate complex of an alkaline earth metal was proposed, as seen in Japanese Patent Publication No. 6465/1982, and a system comprising an organic overbased complex of an alkaline earth metal, an organic tin and sulfur-containing compound and a metallic soap is proposed in Japanese Patent Publication No. 49019/1977. Further, it is proposed in Japanese Laid-Open Patent Publication No. 265645/1991 to use an overbased alkaline earth metal carboxylate-carbonate complex as a stabilizer (the carboxylate of this overbased complex is derived from a monobasic carboxylic acid, as stated above). It is further known to use a dibasic carboxylic acid as a stabilizer. However, a stabilizer containing as constituents both of a monobasic carboxylic acid and/or a monobasic phenol and a polybasic carboxylic acid has not been known.

The above known stabilizers have disadvantages that they bring about, because of their poor long-term heat stability, coloring at the time of molding and processing of the resin, do not have sufficient initial color prevention ability nor plate-out prevention ability, and further spoil the transparency of moldings, and improvement of these problems has strongly been demanded.

Thus, the object of this invention lies in providing an improved halogen-containing resin composition by finding a novel stabilizer not having disadvantages which known stabilizers have.

The present inventors had intensely studied for attaining the above objects, and as a result, they found that the reaction product of at least one overbased complex selected from the group consisting of overbased alkaline earth metal phenolate-carbonate complexes, overbased alkaline earth metal carboxylate-carbonate complexes and overbased alkaline earth metal phenolate carboxylate-carbonate complexes with a polybasic carboxylic acid anhydride is excellent as a stabilizer for halogen-containing resins.

Thus, according to this invention is provided a composition comprises 100 weight parts of a halogen-containing resin having added thereto 0.01 to 10 weight parts of at least one of such reaction products as a stabilizer.

The overbased alkaline earth metal phenolate-carbonate complexes, overbased alkaline earth metal carboxylate-carbonate complexes and overbased alkaline earth metal phenolate carboxylate-carbonate complexes used as raw materials for preparing the stabilizers (reaction products) of this invention can be represented, schematically, by the following formulae (I), (II) and (III), respectively.

$$(RO)_2 M \bullet xMCO_3 \qquad (I)$$
$$(RCOO)_2 M\bullet xMCO_3 \qquad (II)$$
$$(RO)(RCOO)M\bullet xMCO_3 \qquad (III)$$

In each of the above formulae, RCO denotes the residue of a monobasic phenol, RCOO denotes the residue of a monobasic carboxylic acid, and M denotes an alkaline earth metal and x denotes a positive number larger than 0.

The monobasic phenol providing the RO residue includes, for example, phenol, p-t-butylphenol isoamylphenol, octylphenol , nonylphenol, cresol xylenol, octadecylphenol, dinonyphenol diisobutylphenol, etc. The monobasic carboxylic acid providing the RCOO residue includes, for example, caproic acid, caprylic acid, pelargonic acid, 2-ethylhexylic acid, capric acid, neodecanoic acid, undecylenic acid, lauric acid, myristic acid, palmitic acid, stearic acid, isostearic acid, 1,2-hydroxystearic acid, ricinoleic acid, linolic acid, linolenic acid, oleic acid, behenic acid, erucic acid, beef tallow fatty acid, coconut oil fatty acid, tall oil fatty acid, soybean oil fatty acid, benzoic acid, p-t-butylbenzoic acid, ethylbenzoic acid, toluic acid, naphthenic acids, etc. These phenols and carboxylic acids may be used in combination of two or more.

Compounds providing the alkaline earth metal M include compounds capable of forming salts by reaction with acids, for example, oxides, hydroxides, carbonates, etc. of barium, calcium, magnesium, strontium, etc.

x means an excess amount of the metal in the complex, and is a positive number larger than 0, as described above, but generally, is preferably 0.1 to 60, particularly 0.5 to 30. A metal ratio is generally used as a measure expressing the degree of overbasicity. The metal ratio is a value characterizing overbased alkaline earth metal phenolate-carbonate complexes, overbased alkaline earth metal carboxylate-carbonate complexes and overbased alkaline earth metal phenolate carboxylate-carbonate complexes, and means the total chemical equivalents of the metal in the complex to the equivalent of the metal required for the monobasic phenol and/or the monobasic carboxylic acid in the complexes to form a neutral salt. In other words, x corresponds to "(metal ratio)- 1". Therefore, particularly preferred metal ratios in this invention can be said to be 1.5 to 31.

The overbased alkaline earth metal phenolate-carbonate complexes, overbased alkaline earth metal carboxylate-carbonate complexes and overbased alkaline earth metal phenolate carboxylate-carbonate complexes can be prepared by conventional processes. For example, the desired complex can be obtained by dispersing an alkaline earth metal compound in a solvent, adding a smaller than its chemical equivalent amount of a monobasic phenol and/or a monobasic carboxylic acid in the presence of a reaction assistant such as an alcohol, subjecting the mixture to reaction under heating and stirring, blowing carbon dioxide into the reaction mixture to convert the unreacted alkaline earth metal compound to a carbonate, and, if necessary, filtering out the solid matter for concentration adjustment.

The polybasic carboxylic acid anhydride used for preparing the stabilizer of this invention by reacting therewith the above-mentioned overbased complex, includes, for example, maleic anhydride, succinic anhydride, oxalic anhydride, phthalic anhydride, itaconic anhydride, citraconic anhydride, trimellitic anhydride or pyromellitic anhydride, etc. These acid anhydrides can, if necessary, be used in combination of two or more. These acid anhydrides are used in an amount necessary to substitute the acid anhydrides for 0.1 to 95%, preferably 1.0 to 80% of the carbonate radical in the above overbased complex. This percentage is designated a carbonate radical substitution rate" in the later described examples.

The halogen-containing resin used in this invention includes, for example, polyvinyl halides such as polyvinyl chlorides, polyvinylidene chlorides, polyvinyl bromides, polyvinyl fluoride, chlorinated polypropylenes and brominated polyethylenes; resins obtained by halogenating polyolefins; copolymers of halogenated resins such as vinyl chloride-urethane copolymers, vinyl chloride-vinyl acetate copolymers, vinyl chloride-styrene copolymers, vinyl chloride-ethylene copolymers, vinyl chloride-propylene copolymers and vinyl chloride-vinylidene chloride-vinyl acetate copolymers; blends of polymers such as ABS, MBS, EVA, polybutadienes, polyurethanes and polyvinyl acetates with halogen-containing resins; etc.

The composition of this invention is prepared by adding 0.01 to 10 weight parts, preferably 0.1 to 5 weight parts of the above reaction product as a stabilizer to 100 weight parts of such a halogen-containing resin.

It is, of course, possible to additionally compound known substances usually used as stabilizer ingredients into the composition of this invention, so long as they does not reduce the effects of this invention. These usually used stabilizer ingredients include organic acid metallic salts, organic phosphite compounds, organotin compounds, metal hydroxides, metal oxides, polyols, nitrogen-containing nonmetallic compounds, $\beta$-diketone compounds, epoxy compounds, etc. Further, it causes no inconvenience to compound, according to necessity, plasticizers, pigments, fillers, foaming agents, antistatic agents, anti-fogging agents, plate-out preventing agents, surface treating agents, lubricants, flame retardants, antioxidants, ultraviolet absorbers, crosslinking agents, fluorescent agents, brighteners, fungicides, germicides, processing aids, etc.

Synthesis of overbased complexes used for preparation of the stabilizers (reaction products) of this invention is exemplified below by the following synthetic examples 1 to 7.

Synthetic example 1

To a mixture of 40g of methanol, 30g of octanol and 280g of process oil (PUREXX12 : Esso Petroleum) was added 111g of calcium hydroxide gradually to disperse it, 86g of oleic acid was added, the mixture was stirred for 30 minutes, and carbon dioxide (20L/hour) was blown thereinto at 50° C for 6 hours to progress reaction. The mixture was gradually warmed to 160° C to continue reaction while the formed water and the alcohol were distilled off, and then filtered to give a brown solution of an overbased calcium oleate-carbonate complex (Ca content = 6.9% by weight; metal ratio = 5.2) (this product is designated S-1).

Synthetic example 2

To a mixture of 50g of octanol and 150g of process oil (PUREXX12 : Esso Petroleum) was added 122g of barium oxide gradually to disperse it, 24g of water and 117g of oleic acid were added, the mixture was stirred for 30 minutes, and carbon dioxide (20L/hour) was blown thereinto at 130 C for 3 hours to progress reaction. The mixture was gradually heated to 190°C to continue reaction while water was distilled off, and then filtered to give a brown solution of an overbased barium oleate-carbonate complex (Ba = 21%; metal ratio = 3.4) (this product is designated S-2).

Synthetic example 3

To a mixture of 60g of heptanol and 120g of process oil (PUREXX7 : Esso Petroleum) was added 177g of barium oxide gradually to disperse it, 33g of water and 43g of a soybean fatty acid (containing linolic acid, oleic acid, stearic acid, linolenic acid, palmitic and myristic acid as main components) were added, the mixture was stirred for 30 minutes, and carbon dioxide (20L/hour) was blown thereinto at 130° C for 5 hours to progress reaction. The mixture was gradually heated to 170° C to continue reaction while water and heptanol were distilled off, 130g of an aromatic hydrocarbon solvent (Solvesso 100 : Esso Petroleum) was added, and the mixture was filtered to give a brown solution of an overbased barium salt of the soybean fatty acid-carbonate complex (Ba = 21%, metal ratio = 13.1) (this product is designated S-3).

Synthetic example 4

To a mixture of 45g of methanol, 40g of octanol and 280g of process oil (PUREXX12 : Esso Petroleum) was added 60g of magnesium oxide gradually to disperse it, 12g of water and 87g of linolic acid was added, the mixture was stirred for 30 minutes, and carbon dioxide (10L/hour) was blown thereinto at 50° C for 6 hours to progress reaction. The mixture was gradually heated to 190° C to continue reaction while the formed water and the alcohols were distilled off, and then filtered to give a brown overbased magnesium oleate-carbonate complex solution (Mg = 3.3%; metal ratio = 4.0) (this product is designated S-4).

Synthetic example 5

To a mixture of 134g of nonylphenol, 174g of process oil (Mentor 28 : Esso Petroleum) and 62g of an aromatic hydrocarbon solvent (Solvesso 100 : Esso Petroleum) was added 243g of strontium hydroxide (octahydrate salt) gradually to disperse it, the mixture was subjected to reaction at 105° C for one hour, and water was completely removed at 130° C. Carbon dioxide (10L/hour) was blown thereinto for 5 hours to progress reaction, and the mixture was gradually heated to 155° C to continue reaction while water was distilled off, and then filtered to give a brown solution of an overbased strontium nonylphenolate-carbonate complex (Sr = 15%; metal ratio = 2.9) (this product is designated S-5).

Synthetic example 6

To a mixture of 104g of nonylphenol, 124g of process oil (Mentor 28 : Esso Petroleum) and 40g of an aromatic hydrocarbon solvent (Solvesso 100 : Esso Petroleum) was added 138g of barium hydroxide (monohydrate salt) gradually to disperse it, the mixture was subjected to reaction at 105° C for one hour, and water was completely removed at 130° C. Carbon dioxide (30L/hour) was blown thereinto for 2 hours to progress reaction, 41g of p-t-butyl benzoate was added, the mixture was gradually heated to 155° C to progress reaction while water was distilled off, 20g of an aromatic hydrocarbon solvent (Solvesso 100 : Esso Petroleum) was added, and the mixture was filtered to give a dark-brown solution of an overbased barium nonylphenolate p-t-butyl benzoate-carbonate complex (Ba = 21%; metal ratio=2.0) (this product is designated S-6).

Synthetic example 7

To a mixture of 65g of nonylphenol, 28g of phenol, 192g of process oil (Mentor 28 : Esso Petroleum) and 50g of an aromatic hydrocarbon solvent (Solvesso 100 : Esso Petroleum) was added 173 of barium hydroxide (monohydrate salt) gradually to disperse it, the mixture was subjected to reaction at 105° C for one hour, and water was completely removed at 130° C. Carbon dioxide (20L/hour) was blown thereinto for 4 hours to progress reaction, 22g of octylic acid was added, the mixture was gradually heated to 155° C to progress reaction while water was distilled off, 100g of an aromatic hydrocarbon solvent (Solvesso 100 : Esso Petroleum) was added, and the mixture was filtered to give a dark-brown solution of an overbased barium nonylphenolate octylate-carbonate complex (Ba = 21%; metal ratio = 2.4) (this product is designated S-7).

It is also possible to prepare stabilizers (reaction products) of this invention using commercially available overbased complexes in place of ones as synthesized in the above synthetic examples. Representative examples of such commercially available overbased complexes are Lubrizol 2117 (overbased calcium oleate/carbonate complex; calcium 14%), Lubrizol 2116 (overbased basic barium oleate/carbonate complex; barium 34%), Lubrizol 2106 (overbased barium nonylphenolate/carbonate complex; barium 28.5%) (they are produced by Lubrizol CO., USA), etc.

In the following Synthetic examples 30 and 31 exempli fyi ng preparation of stabilizers (reaction product) of this invention, Lubrizol 2116 and Lubrizol 2106 are used after diluted with a solvent in order to unify the barium content to 21%, as shown in the following Preparation examples 1 and 2.

Preparation example 1

61g of an aromatic hydrocarbon solvent (Solvesso 100 : Esso Petroleum) was added to 100g of Lubr izol 2116, followed by stirring at 60° C to give a solution (this preparation is designated T-1).

Preparation example 2

35g of an aromatic hydrocarbon solvent (Solvesso 100 : Esso Petroleum) was added to 100g of Lubrizol 2106, followed by stirring at 60° C to give a solution (this preparation is designated T-2).

Examples of preparing stabilizers (reaction products) of this invention from overbased complexes and polybasic carboxylic acid anhydrides are shown below as Synthetic examples 8 to 31, together with Comparative synthetic examples.

Synthetic examples 8 to 31 and Comparative synthetic examples 1 and 2

Synthetic examples 8 to 31 are those wherein stabilizers (reaction products) of this invention were synthesized using the above S-1 to S-7, Lubrizol 2117 and T-1 and T-2, and Comparative synthetic examples 1 and 2 are those wherein monobasic carboxylic acid anhydrides not utilized in this invention were used.

In accordance with the composition shown in Table-1, the overbased alkaline earth metal phenolate-carbonate complex, the overbased alkaline earth metal carboxylate-carbonate complexes or the overbased alkaline earth metal phenolate carboxylate-carbonate complexes was put in a beaker, the acid anhydride was added while the complex was stirred at 30° C, the mixture was gradually heated to carry out reaction while carbon dioxide was removed, and thereby a uniform liquid reaction product was obtained. The carbonate radical substitution rates of reaction products (S-8 to S-33) obtained by this synthesis are shown in Table-1.

The merits of resin compositions of this invention comprising halogen-containing resins having added thereto stabilizers (reaction products) of this invention are demonstrated below by Examples 1 to 81 and Comparative examples 1 to 32.

The contents of the tests in these examples are as follows

(1) Heat stability test: A specimen is heated at the prescribed temperature in a gear oven, and the coloring degree is judged by visual observation at the prescribed intervals of time according to the following criterion.

| Coloring degree 1 | coloress |
|---|---|
| Coloring degree 2 | pale yellow |
| Coloring degree 3 | yellow |
| Coloring degree 4 | yellowish brown |
| Coloring degree 5 | black |

(2) Transparency test: The transparency of a specimen is judged by visual observation according to the following criterion.

| Transparency 1 | transparency is very good |
| Transparency 2 | transparency is good |
| Transparency 3 | transparency is a little poor |
| Transparency 4 | transparency is poor |

(3) Plate-out property test: A specimen is put closely on a chrome-plated metal plate, heated at 160 C for 5 minutes, and then quickly peeled by pressing a rubber roller several times against the specimen. A new specimen of the same composition is placed closely again on the spot of peeling, and the same operation is repeated. The procedure is repeated four times, and then the degree of the soil is judged by visual observation according to the following criterion.

Values of the soil degree have the following meanings.

| Soil degree 1 | soil is not observed |
| Soil degree 2 | slight soil is observed |
| Soil degree 3 | soil is observed |
| Soil degree 4 | a large amount of soil is observed |

(4) Polyurethane heat resistance test: A semi-rigid polyurethane is cast onto one side of a specimen so as to be 10mm thickness and foamed, and then heated in an oven of 120° C and a number of days taken by the time when the change of color of the surface of the specimen becomes 10 or more in terms of color difference ($\Delta E$) by a differential colorimeter compared with the same specimen not heated is measured.

Examples 1 to 14 and Comparative examples 1 to 5

In order to demonstrate the effects of this invention, the following composition obtained using one of the reaction products of Synthetic examples 8 to 31 and Comparative synthetic examples 1 and 2 was kneaded at 170° C for 5 minutes on a roll, and then pressed at 180° C for 5 minutes to give a sheet 1mm thick. Specimens were cut out from this sheet and tested for heat stability and transparency. The results are shown in Table-2.

```
[Compounding composition (compounding for non-rigid
transparent products)]
PVC (polymerization degree: 1050)    100 weight parts
Plasticizer (DOP*1)                   40        "
Epoxidized soybean oil                3         "
Zinc stearate                         0.3       "
Phosphite ester (DPDP*2)              1.0       "
Reaction product                     See Table-2
     *1   Dioctyl phthalate
     *2   Diphenyl decyl phosphite
```

Examples 15 to 22 and Comparative examples 6 to 10

The following composition was kneaded at 170° C for 5 minutes on a roll, and then pressed at 190° C for 5 minutes to give a sheet 1mm thick. Specimens were cut out from this sheet and tested for heat stability and transparency. The results are shown in Table-3.

| [Compounding composition (compounding for semi-rigid transparent products)] | |
| --- | --- |
| PVC (polymerization degree: 1030) | 100 weight parts |
| Plasticizer (DOP) | 20 weight parts |
| Epoxidized soybean oil | 3 weight parts |
| Zinc stearate | 0.5 weight parts |
| Barium stearate | 0.5 weight parts |
| Phosphite ester (DPDP) | 0.8 weight parts |
| Dibenzoylmethane | 0.1 weight parts |
| Reaction product | See Table-3 |

Examples 23 to 31 and Comparative examples 11 to 15

The following composition was kneaded at 190° C for 5 minutes on a roll, and then pressed at 190° C for 5 minutes to give a sheet 1mm thick. Specimens were cut out from this sheet and tested for heat stability and transparency. The results are shown in Table-4.

[Compounding composition (compounding for rigid products)]

PVC (polymerization degree: 800)  100 weight parts

Metablen P-530A[1]                        3      〃
   (produced by Mitsubishi Rayon Co., Ltd.)

Epoxidized linseed oil            3      〃

Zinc stearate                     1      〃

Barium stearate                   0.3    〃

Antioxidant (Antiox-10[2])        0.1    〃
   (produced by NIPPON OIL AND FATS CO., LTD.)

Reaction product                        See Table-4

   *1   Process aid for PVC

   *2  Tetrakis[methylene-3-(3',5'-di-tert-
        butyl-4'-hydroxyphenyl)-propionate]-methane

Examples 32 to 45 and Comparative examples 16 to 19

The following composition was kneaded at 170° C for 5 minutes on a roll, and then pressed at 180° C for 5 minutes to give a sheet 1mm thick. Specimens were cut out from this sheet and tested for heat stability and plate-out properties. The results are shown in Table-5.

7

[Compounding composition (compounding for wire coating)]

PVC (polymerization degree: 1300)  100 weight parts
Plasticizer (TOTM[*1])                50    ″
Clay                                  10    ″
Zinc stearate                        0.2    ″
Calciumm stearate                    0.2    ″
Stabilizing assistant (NF-100[*2])    0.2    ″
   (produced by Nissan Ferro Organic Chemistry CO.,
   LTD.)
Stabilizing assistant (NF-SE[*3])     0.2    ″
   (produced by Nissan Ferro Organic Chemistry CO.,
   LTD.)
Reaction product                          See Table-5
   *1  Tri-(2-ethylhexyl) trimellitate
   *2  Hydrotalcite perchlorate (stabilizer for
       PVC)
   *3  Tris(2-hydroxyethyl) isocyanurate

Examples 46 to 52 and Comparative examples 20 to 22

The following composition was treated by a supermixer to give a powder compound. The compound was applied onto a glass plate and cured at 190° C for 5 minutes to give a sheet 1mm thick. Specimens were cut out from this sheet and subjected to the heat stability test and the polyurethane heat resistance test. The results are shown in Table-6.

[Compounding composition (compounding for automobile powder slush)]

PVC (polymerization degree: 1050)  90 weight parts

```
PVC Zeon 121                                 10 weight parts
   (produced by Nippon Zeon Co., Ltd.)
Plasticizer (DL-911P*1)                   50        〃
Titanium oxide                             2        〃
Stabilizing assistant (NF-100)            1        〃
   (produced by Nissan Ferro Organic Chemistry CO.,
   LTD.)                                          ·
Zinc stearate                             0.3      〃
Ultraviolet absorber (Tinuvin P)          0.1      〃
   (produced by Ciba-Geigy (Japan) Ltd.)
Light stabilizer (LS-770*2)               0.1      〃
Reaction product                           See Table-6
      *1   Phthalates of linear C_9-C_{11} alcohols
      *2   Bis(2,2,6,6-tetramethyl-4-
           piperidinyl)sebacate
```

Examples 53 to 58 and Comparative examples 23 to 251

The following composition was kneaded at 160° C for 5 minutes on a roll, and then pressed at 180° C for 5 minutes to give a sheet 1mm thick. Specimens were cut out from this sheet and tested for heat stability and transparency. The results are shown in Table-7.

```
[Compounding composition (compounding for agricul-
tural film)]
PVC (polymerization degree: 1300) 100 weight parts
Plasticizer (DOP)                         50        〃
Plasticizer (TCP*1)                        4        〃
Epoxy resin                                2        〃
Stabilizer (LTL-267B*2)                   1.5       〃
   (produced by Nissan Ferro Organic Chemistry CO.,
   LTD.)
Stabilizer (BP-131G*3)                    0.5       〃
   (produced by Nissan Ferro Organic Chemistry CO.,
   LTD.)
Reaction product                           See Table-7
      *1   Tricresyl phosphate
      *2   Ba/Zn stabilizer system for PVC
      *3   Ba/Zn stabilizer system for PVC
```

Examples 59 to 63 and Comparative examples 26 to 28

The following composition was mixed well by a stirrer to give a paste compound. The paste compound was applied onto Kent paper, and cured at 200 C for one minute to give a sheet having a vinyl thickness of 0.3mm. Specimens were cut out from this sheet and tested for heat stability and plate-out properties. The results are shown in Table-8.

| [Compounding composition (compounding for paste foamed wall paper)] | |
| --- | --- |
| Paste resin PX-NLT (produced by SUMITOMO CHEMICAL COMPANY LIMITED) | 100 weight parts |
| Plasticizer (DOP) | 45 weight parts |
| Chlorinated paraffin (A-40) (produced by TOSOH CORPORATION) | 10 weight parts |
| Mineral spirit | 5 weight parts |
| Calcium carbonate (heavy) | 80 weight parts |
| Antimony oxide | 3 weight parts |
| Titanium oxide | 10 weight parts |
| Azodicarbonamide | 2 weight parts |
| Orthobissulfonyl hydrazide | 1 weight parts |
| Zinc octylate | 1 weight parts |
| Reaction product | See Table-8 |

Examples 64 to 68 and Comparative examples 29 to 31

The following composition was kneaded at 140° C for 5 minutes on a roll, and then pressed at 200° C for 5 minutes to give a sheet 1.0mm thick. Specimens were cut out from this sheet and tested for heat stability and plate-out properties. The results are shown in Table-9.

```
[Compounding composition (compounding for the foamed
sole of shoes)]
PVC (polymerization degree:  1300)  80 weight parts
Urethanized PVC (K-650F[1])          70 weight parts
Polyester plasticizer (W-2300[2])    50     〃
Azodicarbonamide                      0.5    〃
```

```
Magnesium carbonate                         5 weight parts

Titanium oxide                              5      ″

Stabilizer (LTL-265*³)                      1      ″

    (produced by Nissan Ferro Organic Chemistry CO.,

    LTD.)

Reaction product                            See Table-9

    *1  Graft copolymer of urethane and PVC

    *2  Poly(adipic acid ester) type plasticizer

    *3  Ba/Zn stabilizer system for PVC
```

Examples 69 to 83 and Comparative example 32

In order to check the effects of other stabilizing assistant, the following composition was kneaded at 180° C for 5 minutes on a roll, and then pressed at 180° C for 5 minutes to give a sheet 1mm thick. Specimens were cut out from this sheet and tested for heat stability. The results are shown in Table-10.

| [Compounding composition (compounding for semi-rigid products)] | |
| --- | --- |
| PVC (polymerization degree: 1030) | 100 weight parts |
| Plasticizer (DOP) | 20 weight parts |
| Epoxidized soybean oil | 3 weight parts |
| Zinc stearate | 0.5 weight parts |
| Phosphite ester (DPDP) | 1.0 weight parts |
| Dibenzoylmethane | 0.1 weight parts |
| Reaction product (S-23) | 1.0 weight parts |

**Claims**

1. A halogen-containing resin composition comprising 100 parts by weight of a halogen-containing resin (1), and 0.01 to 10 parts by weight of a reaction product (2) of at least one overbased complex chosen from overbased alkaline earth metal phenolate-carbonate complexes, overbased alkaline earth metal carboxylatecarbonate complexes and overbased alkaline earth metal phenolate carboxylate-carbonate complexes with at least one polybasic carboxylic acid anhydride.

2. A composition according to claim 1, comprising 100 parts by weight of the halogen-containing resin (1), and 0.1 to 5 parts by weight of the reaction product (2).

3. A composition according to claims 1 or 2, wherein the phenolate component of the overbased complex is nonylphenolate.

4. A composition according to claims 1 or 2, wherein the carboxylate component of the overbased complex is an oleate, a soybean oil fatty acid salt or p-t-butyl benzoate.

5. A composition according to any preceding claim, wherein the alkaline earth metal component of the overbased complex is barium, calcium, magnesium or strontium.

6. A composition according to any preceding claim, wherein the metal ratio of the overbased complex is 1.5 to 31.

7.  A composition according to any preceding claim, wherein the polybasic carboxylic acid anhydride is maleic anhydride, succinic anhydride, oxalic anhydride, trimellitic anhydride, itaconic anhydride, citraconic anhydride or phthalic anhydride.

8.  A composition according to any preceding claim, wherein the carbonate radical substitution rate of the reaction product (2) is 0.1 to 95%.

European Patent Office

**EUROPEAN SEARCH REPORT**

Application Number

EP 95 30 1128

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | PATENT ABSTRACTS OF JAPAN vol. 10 no. 252 (C-369) ,29 August 1986 & JP-A-61 081462 (NISSAN FUERO YUKI KAGAKU KK) 25 April 1986, * abstract * | 1,2 | C08K5/00 C08K5/098 C08K5/138 C08K11/00 |
| A,D | EP-A-0 446 685 (ASAHI DENKA KOGYO KK) * page 3, line 30 - line 39; claims 1-4 * | 1,2,5 | |
| P,A | WO-A-94 26686 (EXXON CHEM. PATS. INC.) * page 1, line 28 - line 29; example 1 * | 1 | |

TECHNICAL FIELDS SEARCHED (Int.Cl.6)

C08K

The present search report has been drawn up for all claims

| Place of search | Date of completion of the search | Examiner |
|---|---|---|
| THE HAGUE | 31 May 1995 | Engel, S |

EPO FORM 1503 03.82 (P04C01)